(19) **Europäisches Patentamt / European Patent Office / Office européen des brevets**

(11) **EP 1 399 730 B1**

(12) **FASCICULE DE BREVET EUROPEEN**

(45) Date de publication et mention de la délivrance du brevet:
**05.09.2012 Bulletin 2012/36**

(21) Numéro de dépôt: **02742556.0**

(22) Date de dépôt: **01.07.2002**

(51) Int Cl.:
*G02B 21/16* (2006.01)     *G02B 21/36* (2006.01)
*G01N 21/64* (2006.01)

(86) Numéro de dépôt international:
**PCT/BE2002/000111**

(87) Numéro de publication internationale:
**WO 2003/002972 (09.01.2003 Gazette 2003/02)**

(54) **PROCEDE ET DISPOSITIF DESTINES A L'OBTENTION PAR MICROSCOPIE D'IMAGES EN TROIS DIMENSIONS D'UN ECHANTILLON**

VERFAHREN UND VORRICHTUNG ZUR DREIDIMENSIONALEN MIKROSKOPISCHEN ABBILDUNG EINER PROBE

METHOD AND DEVICE FOR OBTAINING A SAMPLE WITH THREE-DIMENSIONAL MICROSCOPY

(84) Etats contractants désignés:
**AT BE BG CH CY CZ DE DK EE ES FI FR GB GR IE IT LI LU MC NL PT SE SK TR**

(30) Priorité: **29.06.2001 EP 01870147**
              **18.12.2001 EP 01870281**

(43) Date de publication de la demande:
**24.03.2004 Bulletin 2004/13**

(60) Demande divisionnaire:
**11172450.6 / 2 420 822**

(73) Titulaire: **Université Libre de Bruxelles**
**1050 Bruxelles (BE)**

(72) Inventeurs:
• **DUBOIS, Frank**
  **B-1050 Bruxelles (BE)**

• **YOURASSOWSKY, Catherine**
  **B-1050 Bruxelles (BE)**

(74) Mandataire: **Van Malderen, Joëlle et al**
**pronovem - Office Van Malderen**
**Avenue Josse Goffin 158**
**1082 Bruxelles (BE)**

(56) Documents cités:
**WO-A-00/20929      WO-A-98/13715**
**US-A- 2 770 166      US-A- 3 867 009**
**US-A- 4 827 125      US-A- 6 038 041**

• **DUBOIS F ET AL: "Improved three-dimensional imaging with a digital holography microscope with a source of partial spatial coherence" APPLIED OPTICS, OPTICAL SOCIETY OF AMERICA,WASHINGTON, US, vol. 38, no. 34, 1 décembre 1999 (1999-12-01), pages 7085-7094, XP002232391 ISSN: 0003-6935**

**Description**

**Objet de l'invention**

La présente invention concerne un procédé et un dispositif qui permettent d'obtenir par microscopie des images en trois dimensions d'un échantillon et d'obtenir en trois dimensions le champ de fluorescence émis par cet échantillon, ledit échantillon étant soit fluorescent soit préalablement marqué à l'aide d'un ou plusieurs fluorochromes.

Une des applications dudit procédé et dudit dispositif concerne plus particulièrement l'obtention d'images en trois dimensions de la fluorescence émise par des échantillons biologiques qui peuvent être épais, en vue d'observer leur comportement dynamique et leur évolution dans le temps.

**Etat de la technique**

La microscopie classique en fluorescence a apporté des progrès décisifs dans le domaine de la biologie. En particulier, la technique de l'immunofluorescence a permis de réaliser le marquage spécifique de molécules et leur localisation dans les tissus. Par ailleurs, la découverte des GFP, les « green fluorescent proteins », a révolutionné l'étude de la localisation, de la dynamique et des interactions des protéines dans les cellules vivantes.

Toutefois, un des problèmes rencontrés en microscopie de fluorescence classique réside dans la fluorescence émise par les éléments situés hors du plan de netteté. Cette lumière parasite empêche une bonne lecture de l'image en ajoutant un bruit de fond important. Les images deviennent très difficiles à interpréter lorsque l'on observe des échantillons biologiques épais tels que des embryons.

La microscopie confocale permet quant à elle d'éviter ce problème en réalisant une excitation de la fluorescence de l'échantillon en une zone de très petite dimension qui balaye l'échantillon, et le blocage par une petite ouverture de la fluorescence émise hors de la zone illuminée.

Néanmoins, la microscopie confocale présente elle aussi ses propres inconvénients.

Un premier inconvénient de la microscopie confocale est que cette technique requiert le balayage complet de l'échantillon par un dispositif opto-mécanique. Cette opération requiert un temps relativement important pour analyser un volume (typiquement de l'ordre de quelques secondes) avant que l'image ne soit disponible pour la visualisation.

En outre, la source excitatrice utilisée en microscopie confocale est généralement un laser Argon ou Argon-Krypton qui peut endommager les échantillons biologiques.

Un autre inconvénient est que les sources excitatrices ne permettent pas de couvrir aisément toute la gamme de longueurs d'onde nécessaire à l'observation en fluorescence.

Enfin, la microscopie confocale est une technique extrêmement sophistiquée qui requiert une grande précision lors de la manipulation et qui est en outre onéreuse.

Le document US 6 038 041 propose une technique alternative à la microscopie de fluorescence holographique et décrit un système optique par balayage destiné à reconstruire la fluorescence en trois dimensions provenant d'un spécimen. Pour cela, on balaie le spécimen avec une figure d'interférence dite en zone de Fresnel, selon un balayage à deux dimensions, et on détecte puis on analyse la lumière fluorescence provenant du spécimen.

**Buts de l'invention**

La présente invention vise à fournir un procédé et un dispositif qui permettent d'obtenir, par microscopie, des images en trois dimensions et de mesurer en trois dimensions la fluorescence issue d'un échantillon, en particulier d'un échantillon biologique épais, et qui ne présentent pas les inconvénients des techniques de microscopie classiques, y compris ceux de la microscopie confocale.

En particulier, la présente invention vise à fournir un procédé et un dispositif qui permettent à la fois d'obtenir des images en trois dimensions de l'échantillon et du champ de fluorescence de cet échantillon, c'est-à-dire d'obtenir des informations sur la répartition de la fluorescence sur l'ensemble du volume de l'échantillon, et éventuellement de suivre leur évolution au cours du temps et cela, avec un décalage de temps minimal entre chaque prise d'images.

Un autre but de l'invention est de fournir un procédé et un dispositif qui ne nécessitent pas une manipulation trop complexe et dont le coût soit compétitif, notamment par rapport à la microscopie confocale.

**Résumé de l'invention**

La présente invention se rapporte à un procédé et un dispositif qui permettent d'obtenir des images en trois dimensions d'un échantillon, de préférence un échantillon biologique épais, et d'obtenir le champ de fluorescence en trois dimensions émis par ledit échantillon par le couplage de signaux interférométriques obtenus par holographie digitale et de signaux de fluorescence.

On entend par « échantillon épais» un échantillon dont les dimensions sont telles qu'il est impossible d'avoir une image nette simultanément sur toute la profondeur de l'échantillon par un procédé de microscopie optique classique.

En réalité, un premier objet de la présente invention vise donc à proposer un procédé pour obtenir par microscopie des images en trois dimensions d'un échantillon, en particulier d'un échantillon biologique épais, et du champ de fluorescence émis par cet échantillon, caractérisé en ce qu'il comprend:

- une étape de mesure et enregistrement, au cours de laquelle on mesure et enregistre de façon séquentielle et indépendante d'une part des signaux interférométriques obtenus par holographie digitale et d'autre part des signaux de fluorescence, issus de l'échantillon ;
- une étape de traitement, au cours de laquelle on combine lesdits signaux interférométriques obtenus par holographie digitale et lesdits signaux de fluorescence ainsi enregistrés, de manière à reconstruire des images nettes, en trois dimensions, de l'échantillon lui-même et du champ de fluorescence émis par ledit échantillon à un instant donné.

De préférence, on réitère au cours du temps lesdites étapes de mesure et enregistrement, et de traitement, de manière à suivre l'évolution des images en trois dimensions de l'échantillon et du champ de fluorescence dudit échantillon.

De manière avantageuse, la combinaison des signaux interférométriques obtenus par holographie digitale et des signaux de fluorescence pour reconstruire les images nettes en trois dimensions de l'échantillon étudié lui-même et du champ de fluorescence dudit échantillon, se fait par analyse numérique.

Un second objet de la présente invention vise à proposer un dispositif pour la mise en oeuvre du procédé décrit ci-dessus et qui comprend un microscope fonctionnant en holographie digitale, combiné à une source d'excitation de la fluorescence.

De préférence, la source d'excitation en fluorescence fonctionne en mode de réflexion ou de transmission.

Avantageusement, le microscope fonctionnant en holographie digitale comprend une source de lumière partiellement cohérente, ou éventuellement cohérente, fonctionnant en transmission et qui est capable de générer un faisceau lumineux source.

Selon une première forme d'exécution préférée de l'invention, la source de lumière partiellement cohérente dudit microscope comprend les éléments suivants : une source émettrice de lumière de largeur spectrale réduite, une première lentille, une première ouverture, une seconde lentille, une seconde ouverture et une troisième lentille, la disposition relative de ces différents éléments étant telle que lorsque la source fonctionne, la lumière émise par la source émettrice de lumière rencontre successivement la première lentille, la première ouverture, la seconde lentille, la seconde ouverture et la troisième lentille et la lumière à la sortie la troisième lentille est une lumière collimatée.

Selon une autre forme d'exécution préférée de l'invention, la source de lumière partiellement cohérente dudit microscope comprend les éléments suivants :

une source émettrice de lumière de largeur spectrale réduite, une fibre optique, une première lentille, une seconde lentille, une troisième lentille et une ouverture à ouverture réglable, la disposition relative de ces différents éléments étant telle que lorsque la source fonctionne, la lumière émise par la source émettrice de lumière traverse d'abord la fibre optique de manière à avoir un champ lumineux homogène, puis rencontre la première lentille puis la seconde lentille et la troisième lentille pour obtenir une lumière collimatée sur l'ouverture.

Selon une autre forme d'exécution préférée de l'invention, la source de lumière partiellement cohérente dudit microscope comprend les éléments suivants :

une source laser, une première lentille, un diffuseur tournant, une seconde lentille et une ouverture, la disposition relative de ces différents éléments étant telle que lorsque la source fonctionne, le faisceau laser émis par la source laser rencontre d'abord la première lentille, puis le diffuseur tournant qui est placé derrière le point focal de ladite première lentille, puis la deuxième lentille placée à sa distance focale par rapport au plan du diffuseur tournant, puis ladite ouverture.

Selon une autre forme d'exécution préférée de l'invention, la source de lumière partiellement cohérente dudit microscope comprend les éléments suivants : une source laser, une première lentille, un diffuseur tournant tel qu'un verre dépoli, et une seconde lentille, la disposition relative de ces différents éléments étant telle que lorsque la source fonctionne, le faisceau laser émis par la source laser traverse d'abord la première lentille puis le diffuseur puis la deuxième lentille, le faisceau laser à la sortie de la première lentille étant focalisé en un point de focalisation situé en amont du diffuseur à une distance réglable du diffuseur. Une telle source est utilisée avec le microscope holographique de la présente invention sans la présence des lentilles dudit microscope.

De préférence, le microscope fonctionnant en holographie digitale comprend en outre:

- un premier sous-ensemble, mobile, comprenant un séparateur de faisceau et un miroir, pour former deux faisceaux parallèles, un faisceau objet et un faisceau de référence à partir du faisceau lumineux source ;
- des moyens, de préférence des miroirs, pour diriger le faisceau lumineux source sur le premier sous-ensemble, au niveau du séparateur de faisceau ;
- un deuxième sous-ensemble, fixe ou mobile, comprenant également un séparateur de faisceau et un miroir, pour combiner ledit faisceau objet et ledit faisceau de référence en un faisceau lumineux recombiné ;
- une cellule objet comprenant un échantillon à étudier, disposée sur le trajet optique du faisceau objet entre le premier sous-ensemble et le deuxième sous-ensemble ;
- un premier objectif de microscope, sur le trajet optique du faisceau objet entre le premier sous-ensemble et le deuxième sous-ensemble, en aval de la cellule objet ;
- des moyens de compensation de chemin optique, disposés sur le trajet optique du faisceau de référence entre le premier sous-ensemble et le deuxième sous-ensemble ;
- un deuxième objectif de microscope, disposé sur le trajet optique du faisceau de référence entre le premier
- sous-ensemble et le deuxième sous-ensemble, en aval desdits moyens de compensation de chemin optique ;
- des premiers moyens de focalisation aptes à focaliser le faisceau objet sur la cellule objet ;
- et des seconds moyens de focalisation aptes à focaliser le faisceau de référence sur lesdits moyens de compensation de chemin optique.

De préférence, lesdits moyens de compensation de chemin optique comprennent une cellule de référence comparable à la cellule objet mais ne comprenant pas l'échantillon à étudier.

De préférence, lesdits moyens de compensation de chemin optique comprennent un matériau transparent d'épaisseur et de composition adéquates.

Des moyens d'enregistrement et de traitement, tels que de préférence une caméra CCD couplée à des moyens informatiques de traitement et d'analyse d'images, peuvent également être prévus pour enregistrer et traiter lesdits signaux interférométriques et lesdits signaux de fluorescence, ainsi que des moyens de focalisation additionnels pour focaliser ledit faisceau lumineux recombiné sur lesdits moyens d'enregistrement.

## Brève description des figures

La figure 1 représente une première forme d'exécution d'une source partiellement cohérente spatiale selon la présente invention et réalisée à partir d'une source spatialement incohérente.

La figure 2 représente une deuxième forme d'exécution d'une source partiellement cohérente spatiale selon la présente invention et réalisée à partir d'une source spatialement incohérente.

La figure 3 représente une troisième forme d'exécution d'une source partiellement cohérente spatiale selon la présente invention et réalisée à partir d'une source cohérente spatiale.

La figure 4 représente une quatrième forme d'exécution d'une source partiellement spatiale cohérente selon la présente invention et réalisée à partir d'une source cohérente spatiale.

La figure 5 représente une forme préférée d'exécution du dispositif selon la présente invention, utilisant une source partiellement cohérente spatiale telle que décrite à la figure 2.

## Description détaillée de plusieurs formes d'exécution de l'invention

*Sources lumineuses utilisées pour l'holographie digitale*

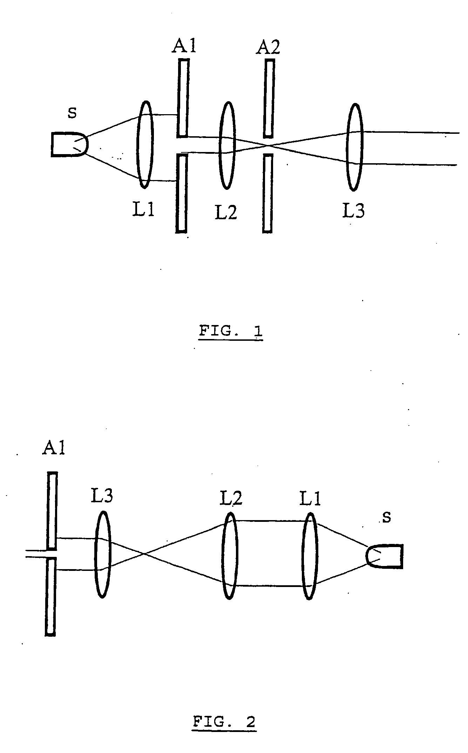

Un premier type de source lumineuse utilisable dans le dispositif selon la présente invention correspond à une source partiellement cohérente telle que représentée à la figure 1. Une lentille L1 achromatique collimate les faisceaux lumineux émis par une source incohérente spatiale étendue filtrée en longueur d'onde, par exemple une LED (diode émettrice de lumière), vers un premier iris A1 à ouverture réglable. L'ouverture A1 limite le spectre angulaire de la source afin d'augmenter la cohérence spatiale de la lumière. Une seconde lentille L2 achromatique crée une source secondaire en son plan focal où, un second iris A2 limite la taille de la source. Une troisième lentille L3 forme un faisceau collimaté. Les distances focales de L1, L2, L3 sont, par exemple, de 100 mm pour l'holographie digitale.

Un deuxième type de source lumineuse utilisable dans le dispositif selon la présente invention correspond à une source partiellement cohérente telle que représentée à la figure 2. Une lentille L1 collimate les faisceaux lumineux émis par une source incohérente spatiale étendue filtrée en longueur d'onde, par exemple une LED (diode émettrice de lumière). Afin d'obtenir un champ lumineux homogène, les faisceaux lumineux de cette source peuvent être acheminés par une fibre optique, dont le coeur est liquide, depuis la LED vers la lentille L1. Le jeu de lentilles L2 et L3 forme un faisceau collimaté. Le filtre spatial A1 limite le spectre angulaire de la source afin d'augmenter la cohérence spatiale de la lumière.

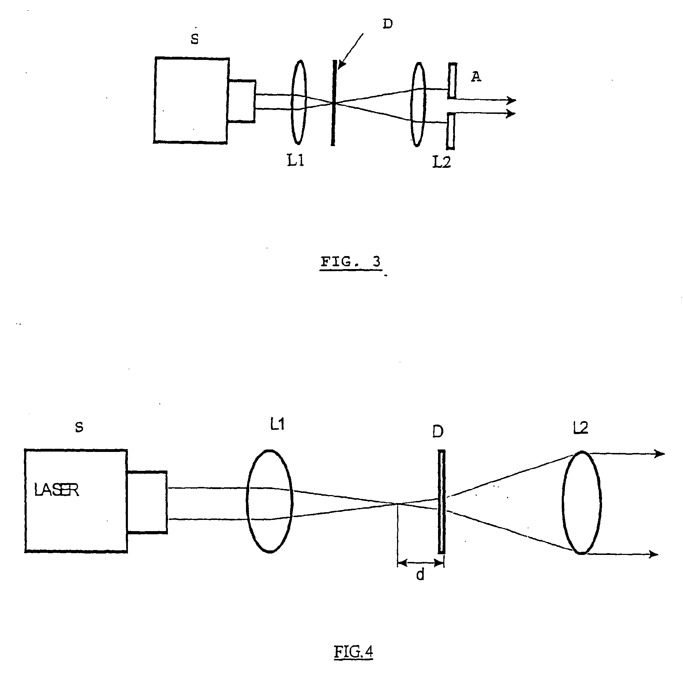

Il est également possible d'utiliser dans le dispositif selon la présente invention une source laser rendue partiellement incohérente. La figure 3 représente le principe de fonctionnement d'une telle source classiquement utilisée en optique. Un faisceau laser à faisceau parallèle est focalisé par une lentille L1. Un diffuseur tournant D est placé derrière le point focal de manière à former une tache lumineuse dont le diamètre est suffisant pour éclairer le champ de vue du microscope. Le diffuseur crée un champ de « speckle » (granulosité laser) qui varie avec la rotation du diffuseur. Une lentille L2 est placée à sa distance focale par rapport au plan du diffuseur tournant.

Une ouverture A est ensuite placée derrière la lentille de manière à pouvoir élargir la dimension de la taille des grains de « speckle ». En utilisant une rotation du moteur suffisamment rapide par rapport au temps d'exposition du système d'enregistrement d'images, on montre qu'une telle source est équivalente à une source partiellement cohérente spatiale telle que décrite ci-dessus. La largeur de la cohérence spatiale est directement reliée à la dimension des grains de « speckle » qui est ajustée par le diamètre de l'ouverture.

Un autre type de source collimatée et partiellement cohérente à partir d'une source cohérente utilisable dans le dispositif selon la présente invention est représenté à la figure 4. Un faisceau laser est focalisé au voisinage d'un verre dépoli (D) par une lentille (L1). Le dépoli diffuse la lumière. Une lentille (L2) placée derrière le verre dépoli collimate la lumière diffusée par le dépoli. En ajustant la distance (d) entre le point de focalisation et le verre dépoli, on règle la dimension des grains de speckle du faisceau collimaté.

### Microscope fonctionnant en holographie digitale

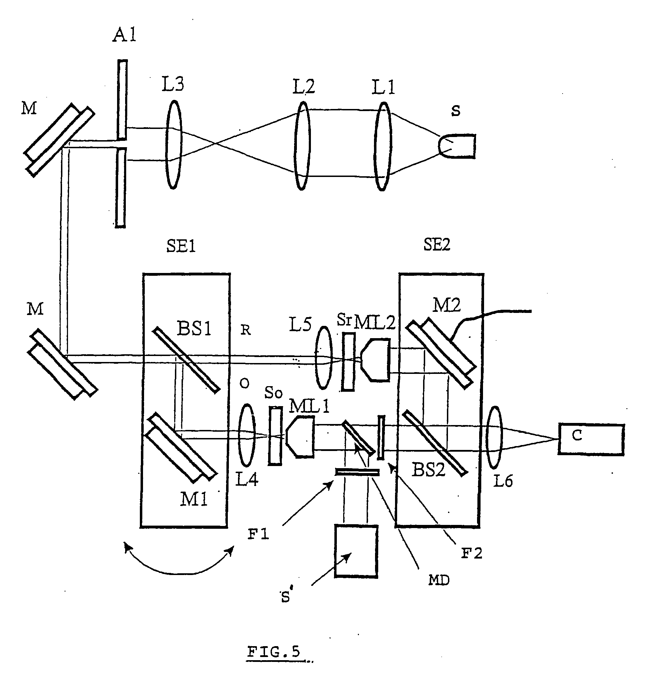

La figure 5 schématise le plan du microscope utilisé dans le dispositif selon la présente invention. L'interféromètre du microscope fonctionnant en holographie digitale est du type Mach Zehnder et comprend deux sous-ensembles SE1 et SE2. Chacun de ceux-ci comporte un séparateur de faisceau, respectivement BS1 et BS2, et un miroir, respectivement M1 et M2. La source S pour l'holographie digitale est une source partiellement cohérente telle que l'une de celles décrites ci-dessus. Ladite source S illumine le séparateur de faisceau BS1. Une partie du faisceau est transmis par BS1 et une partie est réfléchie vers le miroir M1.

Le premier sous-ensemble SE1 permet de former deux faisceaux lumineux parallèles, le faisceau objet O et le faisceau de référence R. Ce premier sous-ensemble SE1 est monté sur une table de rotation, alors que le second sous-ensemble SE2 est fixe ou mobile. Ceci permet de régler l'égalisation du trajet optique des deux faisceaux de l'interféromètre, le faisceau objet O et le faisceau de référence R.

Au niveau du faisceau objet, une lentille L4 focalise le faisceau lumineux sur l'objet ou l'échantillon contenu dans sa cellule d'observation So. L'objet est observé avec un objectif de microscope ML1 convenant à l'observation en fluorescence (les différents grossissements possibles en microscopie classique sont utilisables). Le couple de lentilles L4-ML1 forme un système afocal. L'objectif ML1 réalise, en combinaison avec la lentille L6, l'image d'un plan passant au travers de l'échantillon.

Parallèlement, au niveau du faisceau de référence R, la lentille L5 focalise le faisceau lumineux, soit sur une cellule d'observation Sr, identique à celle comportant l'échantillon mais sans la présence de ce dernier, soit sur un matériau transparent de composition et d'épaisseur adéquates, tel que par exemple du verre. Cette disposition permet d'optimiser l'égalisation du trajet optique des deux faisceaux de l'interféromètre.

Un objectif de microscope ML2, identique à ML1, est disposé sur le faisceau de référence. Le couple de lentilles L5-ML2 constitue également un système afocal. Les chemins optiques ML1-L6 et ML2-L6 sont ajustés pour être identiques.

Le second sous-système SE2, qui comporte le miroir M2 et le séparateur de faisceau BS2, permet de combiner le faisceau objet O et le faisceau de référence R. Les faisceaux objet O et de référence R combinés interfèrent au niveau du plan sensible de la caméra (référencée C sur la figure 5).

Comme indiqué ci-dessous, l'implantation de l'holographie digitale requiert la connaissance de l'amplitude optique mesurée dans un plan de netteté interceptant l'échantillon. L'amplitude optique peut être déterminée à partir des figures d'interférence par deux méthodes :

(i) la méthode de la porteuse ou de la transformée de Fourier. Par cette méthode les faisceaux objets et de référence sont incidents sur la caméra CCD avec un petit angle de manière à obtenir, lorsque aucun échantillon n'est analysé, un réseau de franges d'interférence linéaire. La mesure de changement de phase optique introduit par l'échantillon se traduit alors par une variation de la forme des franges. La détermination de l'amplitude résulte d'une analyse par transformée de Fourier.

(ii) le miroir (M2) du sous-ensemble SE2 est muni d'un système de déplacement piézoélectrique suivant son axe optique qui permet de changer le chemin optique de référence par des fractions précises de longueur d'onde. Ceci permet d'implanter la technique dite de « phase-stepping » qui consiste à enregistrer plusieurs images déphasées d'une fraction constante de longueur d'onde. Par un traitement informatique, la combinaison de ces interférogrammes permet le calcul de l'amplitude lumineuse émergeante de l'échantillon.

Le microscope peut fonctionner en mode microscopie directe ou inverse selon les besoins.

***Dispositif pour la fluorescence***

Sur la figure 5, la source d'excitation S' de la fluorescence est placée en mode de réflexion. Comme indiqué ci-dessus, on peut placer cette source pour fonctionner en mode de transmission.

***Fluorescence en lumière réfléchie***

Dans cette configuration qui correspond à celle représentée à la figure 5, la source S' est, soit une lampe à vapeur de mercure, soit une lampe quartz-halogène, soit encore une source qui émet de la lumière dans une gamme de courtes longueurs d'onde nécessaire à l'excitation de la fluorescence. Cette source peut, le cas échéant être un laser. Les rayons lumineux, collimatés par une lentille, parviennent à un filtre d'excitation F1 sélectionné en fonction du fluorochrome utilisé et sont réfléchis par un miroir dichroïque adéquat MD sur l'échantillon au travers de l'objectif.

La lumière fluorescente émise par les fluorochromes contenus dans l'échantillon traverse le miroir dichroïque MD, transparent à ces longueurs d'onde plus longues, traverse un filtre d'arrêt F2 placé pour bloquer les éventuelles courtes longueurs d'onde, et est enregistrée par la caméra.

Des matériaux de composition et d'épaisseur adéquates, par exemple du verre, peuvent aussi être ajoutés dans le faisceau de référence pour optimiser l'égalisation du trajet optique des deux faisceaux de l'interféromètre.

***Fluorescence en lumière transmise***

Pour cette configuration, il y a deux réalisations possibles:

(i) une réalisation à une seule source : la seule source utilisée est celle prévue pour le microscope fonctionnant en holographie digitale mais est simultanément utilisée comme source excitatrice de la fluorescence car elle émet dans une gamme de courtes longueurs d'onde. Ceci permet de réaliser à la fois l'hologramme de l'objet et l'excitation des fluorochromes de l'échantillon.

(ii) une réalisation à deux sources : On combine la source spécifique pour le microscope fonctionnant en holographie digitale à la source émettant la lumière nécessaire à l'excitation des fluorochromes des deux manières suivantes : soit la source nécessaire à la fluorescence est placée juste avant le séparateur de faisceau BS1 soit, cette source est placée juste avant la lentille L4 qui focalise les rayons lumineux sur l'échantillon.

***Couplage des signaux obtenus en holographie digitale et en fluorescence pour la reconstruction 3D des signaux de fluorescence***

Comme décrit ci-dessus, l'instrument comporte deux sous-systèmes optiques couplés qui permettent :

(i) l'enregistrement des images interférométriques en transmission de l'échantillon

(ii) l'enregistrement de l'image fluorescente de l'échantillon activée par la source d'excitation de la fluorescence

Ces images sont formées par le système afocal constitué par le couple de lentilles ML1-L6 qui réalise l'image nette d'un plan perpendiculaire à l'axe optique de l'échantillon sur la face sensible de la caméra C. Les images interférométriques et de fluorescence sont enregistrées séquentiellement :

(i) la source de fluorescence est masquée par un obturateur et on enregistre la ou les images interférométriques.

(ii) la source permettant l'enregistrement interférométrique est masquée ou éteinte et on enregistre la ou les images de fluorescence.

Lorsque l'épaisseur de l'échantillon est plus petite que la profondeur de champ du dispositif d'imagerie, l'image de l'échantillon est nette partout. Par contre, et c'est le cas qui concerne le présent développement, lorsque l'épaisseur de l'échantillon excède la profondeur de champ, les parties de l'échantillon au-delà de la zone de profondeur de champ donnent des parties floues dans l'image.

Comme l'échantillon est observé par une caméra C grâce au système afocal de lentilles ML1-L6, les signaux interférométriques et de fluorescence sont parfaitement superposés au niveau du capteur et les plans de netteté sont communs pour les deux types d'illumination grâce à l'utilisation de composantes optiques ML1-L6 achromatiques.

### Rôle de l'enregistrement interférométrique ou holographique

L'enregistrement interférométrique permet la mesure précise de l'amplitude optique complexe dans le plan net de l'échantillon. La source interférométrique cohérente ou partiellement cohérente S est activée et illumine en faisceau collimaté le séparateur de faisceau BS1.

Une partie de ce faisceau, appelé faisceau objet, suit le trajet BS1-M1-L4-So-ML1-BS2-L6-C. La phase et l'amplitude de ce faisceau sont modulées par l'échantillon contenu dans la cellule objet So.

L'autre partie du faisceau, appelé faisceau de référence, suit le trajet BS1-L5-Sr-ML2-M2-BS2-L6-C. La phase et l'amplitude de ce faisceau sont modulées par la cellule de référence Sr.

Les faisceaux objet et de référence interfèrent sur la face sensible de la caméra (C). La forme de la figure d'interférence est influencée par les changements relatifs de phase optique introduits par les échantillons So et Sr. Comme la cellule de référence Sr est une cellule expérimentale comparable à la cellule objet So mais sans l'échantillon étudié, la forme de la figure d'interférence n'est influencée de manière significative que par les changements de phase optique introduits par l'échantillon étudié.

Le premier objectif est de mesurer l'amplitude optique complexe émergente de l'échantillon à partir de la ou des figure(s) d'interférence mesurée(s) par la caméra. Pour cela, deux méthodes classiques en interférométrie sont disponibles :

(i) La méthode de la transformée de Fourier [1]

(ii) La méthode de décalage de phase.

Connaissant l'amplitude optique complexe dans le plan de netteté de l'échantillon, les méthodes d'holographie digitale permettent de calculer les amplitudes complexes dans des plans parallèles [2-6]. Ces méthodes consistent à calculer par des méthodes numériques le champ optique en utilisant les lois de propagation de l'optique de Fourier (Equation de Kirchhoff - Fresnel). On peut ainsi calculer les amplitudes lumineuses complexes dans des plans qui sont hors de la zone de profondeur de champ initiale du système d'imagerie. Ces méthodes permettent ainsi de rendre nettes des zones d'image qui ont été enregistrées floues.

Une amplitude optique complexe $u(x,y)$ dans un plan (x, y) s'écrit :

$$u(x, y) = \sqrt{I(x, y)} \exp\{i\alpha(x, y)\} \qquad (1)$$

où :

$I(x, y)$ est l'intensité lumineuse au point (x,y)
$\alpha(x,y)$ est la phase optique au point (x,y)
$i$ est le nombre imaginaire tel que $i^2 = -1$

La méthode interférométrique revient donc à déterminer, dans le plan dont on réalise l'image, les quantités $I(x,y)$ et $\alpha(x,y)$ de manière à pouvoir calculer, par holographie digitale, l'amplitude optique $u_d'(x',y')$ dans les plans parallèles séparés par des distances $d$. Cette opération s'écrit formellement par :

$$u_d'(x', y') = R[d]u(x, y) \qquad (2)$$

où R[d] est l'opérateur de Kirchhoff-Fresnel.
Plusieurs implantations numériques de cette expression existent dans la littérature [2].

### Enregistrement du signal de fluorescence

La source de l'excitation de la fluorescence étant activée, les substances fluorescentes réparties dans l'échantillon émettent de manière isotrope de la lumière qui donne lieu à un signal détecté par la caméra vidéo (CCD). Si on considère l'émission par un point ($x0,y0$) de l'échantillon situé à une distance d du plan dont on réalise l'image par le couple de lentille ML1-L6, du fait que l'objectif du microscope a une ouverture finie, le point émetteur de fluorescence produit, dans le plan objet dont on réalise l'image, un disque lumineux observable par la caméra vidéo.

Cette répartition de l'intensité lumineuse est notée $I_p(x-x0, y-y0)$ où l'indice $p$ indique que l'on considère le signal de fluorescence.

Le diamètre **D** du disque lumineux s'exprime, en première approximation, par :

$$D = \frac{d}{fnumber_{ML1}} \qquad (3)$$

où $fnumber_{ML1}$ est le rapport de la distance focale de ML1 par le diamètre de son ouverture.

Il est à noter que l'équation (3) doit être corrigée pour les très petites distances $d$ avec lesquelles il faut considérer les effets de diffraction en illumination incohérente. Toutefois, pour ces distances $d$, l'image du point source se trouve dans la zone de profondeur de champ et ne, nécessite donc aucune manipulation ultérieure sur la netteté.

Dans le cas d'échantillons plus complexes comportant plusieurs zones d'émission qui peuvent se trouver à des distances d différentes du plan de netteté, on obtient une répartition d'intensité lumineuse qui s'exprime comme la somme de contributions élémentaires $I_p$ ($x-x0$, $y-y0$).

***Couplage entre l'amplitude complexe du signal d'holographie digitale et du signal de fluorescence***

Le concept qui fait l'objet de la présente demande de brevet est le couplage du signal d'holographie digitale et le signal de fluorescence de manière à pouvoir manipuler le signal de fluorescence et à pouvoir remettre nets, par procédé numérique d'holographie digitale, des signaux de fluorescence qui auraient été enregistrés flous.

Pour que ce couplage puisse se faire, il faut que les régions au sein de l'échantillon biologique qui présentent une fluorescence aient des propriétés optiques (absorbance optique et/ou indice de réfraction) distinctes des régions non fluorescentes qui les entourent. Il faut remarquer que cette condition est satisfaite dans de nombreuses applications en biologie cellulaire, puisque la fluorescence permet le marquage d'organites cellulaires qui sont également visibles par la microscopie optique en contraste de phase. Cette mise en évidence par contraste de phase démontre une variation locale d'indice de réfraction et/ou d'absorbance des organites.

Si on considère une zone limitée de fluorescence au niveau de l'échantillon biologique qui est également une zone de changement local d'indice et/ou d'absorbance par rapport à un fond constant et si on suppose que cette zone se trouve à une distance d du plan de netteté de l'échantillon, la zone de fluorescence, comme décrit précédemment, donne lieu à une tache lumineuse d'intensité $I_p(x-x0,y-y0)$. L'amplitude lumineuse mesurée par interferométrie est donnée par l'équation (1) :

$$u(x, y) = \sqrt{I(x, y)} \exp\{i\alpha(x, y)\}$$

Dans un premier temps, on construit une amplitude équivalente de fluorescence par :

$$u_p(x, y) = A\sqrt{I_p(x - x0, y - y0)}\sqrt{I(x, y)} \exp\{i\alpha(x, y)\} \qquad (4)$$

où A est une constante multiplicative qui ne joue pas de rôle déterminant dans la discussion présente.

L'équation (4) pondère l'amplitude interférométrique par l'intensité de fluorescence de manière à amplifier la zone influencée par la fluorescence.

On applique ensuite la reconstruction par holographie digitale pour reconstruire l'image nette de la fluorescence :

$$u_p{}'(x', y') = R[-d]u_p(x, y) \qquad (5)$$

On calcule ensuite l'intensité lumineuse $u_p{}'(x', y')u_p{}'(x', y)$ pour obtenir l'image nette d'intensité de la tache de fluorescence.

En pratique, on mesure l'amplitude lumineuse d'interférométrie et la tache de lumière fluorescente sans connaître la distance d. On applique alors la technique de reconstruction par holographie digitale de manière incrémentale pour atteindre l'image la plus nette de la tache de fluorescence.

Si on considère à présent le cas où au sein de l'échantillon l'on a plusieurs zones limitées avec des variations d'indice de réfraction et/ou d'absorbance parmi lesquelles seules certaines de ces zones présentent une émission de fluorescence, deux cas peuvent se présenter :

(i) 1er cas : Les signaux d'interférométrie et de fluorescence sont séparés dans le plan net de l'échantillon. Dans ce cas, on peut directement utiliser la méthode telle que décrite ci-dessus.
(ii) 2ème cas : Les signaux d'interférométrie et de fluorescence se recouvrent au moins partiellement dans le plan net de l'échantillon.

Dans ce cas deuxième cas, l'utilisation de la méthode telle que décrite ci-dessus peut donner lieu à des reconstructions fausses de zones fluorescentes qui en réalité ne le sont pas. En effet, si on considère d'une part les signaux d'interférométrie dus à deux zones de variations d'indice et/ou d'absorbance qui se superposent et d'autre part qu'une seule de ces deux zones présente de la fluorescence, comme la tache de fluorescence recouvre au moins partiellement les signaux interférométriques provenant des deux zones, l'utilisation de la méthode précédente donnera une contribution significative à la fluorescence pour les deux zones. Dans ce cas, de nombreuses méthodes de correction peuvent être implantées de manière à ne reconstruire que la zone pertinente. On citera, à titre d'exemple, une procédure itérative de correction. La distribution de fluorescence initiale dans le plan de netteté sera appelée D0. A la première itération, on utilise la méthode précédente de reconstruction holographique qui donne des contributions en fluorescence pour les deux zones. Le résultat de cette reconstruction sera appelé la configuration C1. On calcule ensuite, en utilisant les lois de propagation de l'optique incohérente, la distribution de lumière de fluorescence, appelée D1, dans le plan de netteté de l'échantillon qui correspond à C1. On compare D1 et D0 de manière à appliquer une correction à C1 et à obtenir une seconde configuration C2. On calcule de là une nouvelle distribution de fluorescence D2 par les lois de l'optique incohérente et on répète ainsi le processus itératif de correction jusqu'à obtenir une différence suffisamment faible entre la distribution de fluorescence DN ($N^{ème}$ itération) calculée par les lois de l'optique incohérente et la distribution de fluorescence D0. De nombreuses méthodes d'optimalisation numérique permettent l'implantation d'un tel processus d'optimalisation. A titre d'exemple, on peut citer les méthodes de recuit simulé basées sur la recherche aléatoire de la minimalisation d'une fonction coût qui dans le cas présent pourrait être $(DN-D0)^2$ [7].

En résumé, la présente invention consiste à combiner un dispositif de fluorescence avec un microscope fonctionnant en holographie digitale pour la mesure en trois dimensions des zones fluorescentes de micro-échantillons et offre de nombreux avantages par rapport aux techniques actuellement connues.

Un premier avantage est que la présente invention, comparativement à la microscopie classique en fluorescence, permet d'obtenir une image tridimensionnelle de la fluorescence sans que l'on n'ait besoin de déplacer l'échantillon suivant l'axe optique du système.

En outre, dans la présente invention, l'information de phase et d'amplitude fournie par l'holographie digitale permet d'éliminer, en chaque point, la fluorescence parasite par traitement numérique.

Par rapport à la microscopie confocale, la présente invention présente également des avantages particuliers.

Un de ces avantages est que l'invention est beaucoup moins complexe à mettre en oeuvre que la microscopie confocale.

Un autre avantage est qu'elle permet d'utiliser une gamme étendue de sources lumineuses pour générer le signal de fluorescence, et étend donc la gamme de longueurs d'onde disponible pour couvrir les applications. Cela permet en outre d'utiliser des sources moins agressives vis-à-vis des échantillons biologiques.

On notera également que, par rapport à la microscopie confocale, la présente invention permet d'enregistrer les informations sur tout l'échantillon de manière simultanée sur le volume et avec un décalage très faible entre chaque prise (typiquement 1/25 s) pour l'enregistrement de la fluorescence, de telle sorte que la distorsion temporelle introduite par le balayage de la microscopie confocale est éliminée.

En conclusion, la méthode proposée dans la présente invention, qui consiste à coupler des signaux d'interférométrie avec des signaux de fluorescence, permet de localiser en trois dimensions, et de rendre nettes, les régions qui présentent une fluorescence au sein d'un échantillon. Cette méthode est susceptible de trouver des applications intéressantes dans le domaine de l'embryologie où les biologistes souhaitent analyser l'évolution et la dynamique d'embryons vivants qui présentent très rapidement des épaisseurs qui excèdent la profondeur de champ des microscopes optiques. La présente invention peut ainsi permettre, par exemple, une analyse a *posteriori* en trois dimensions du mouvement des cellules marquées par des fluorochromes.

En outre, le microscope holographique selon la présente invention, présente également un certain nombre d'avantages par rapport aux dispositifs de l'état de la technique, en particulier par rapport au microscope holographique décrit dans l'article « Improved three-dimensional imaging with digital holography microscope using a partial spatial coherent source », F. Dubois et al., Appl. Opt. 38, pp.7085-7094 (1999).

En effet, comparativement au microscope holographique décrit dans cette publication, dans le microscope holographique selon la présente invention, la lentille L4 et la lentille L5 qui permettent de focaliser la lumière au niveau, respectivement de la cellule objet et de la cellule de référence (ou d'autres moyens de compensation de chemin optique), sont situées dans l'interféromètre lui-même, précisément devant les objectifs, respectivement ML1 et ML2, et non plus en dehors de l'interféromètre. De ce fait, les rayons lumineux qui parviennent au séparateur de faisceau BS1 sont collimatés à l'aide des miroirs M (figure 5) et la position du point de focalisation ne se modifie pas lorsque la position du rayon incident par rapport à l'axe optique varie. Cette caractéristique permet une utilisation beaucoup plus efficace de la table de rotation et une égalisation plus facile des trajets optiques des faisceaux de référence et objet. Cette possibilité de réglage est essentielle dans un microscope holographique comportant une source de lumière partiellement cohérente.

De plus, dans le microscope holographique selon la présente invention la présence soit de la cellule d'observation de référence Sr, comparable à la cellule So qui elle contient l'échantillon, soit d'un matériau transparent d'épaisseur et composition adéquates permet encore d'améliorer l'égalisation des trajets optiques objet O et de référence R.

## REFERENCES BIBLIOGRAPHIQUES

1. M. Takeda, H. Ina, S. Kobayashi, "Fourier transform method of fringe pattern analysis for computer based topography and interferometry", J. Opt. Soc. Am. 72, 156-160 (1972)

2. F. Dubois, L. Joannes, J.-C. Legros, "Improved three-dimensional imaging with digital holography microscope using a partial spatial coherent source " Appl. Opt. 38, 7085-7094 (1999)

3. E. Cuche, F.Bevilacqua and C. Depeursinge, "Digital holography for quantitative phase contrast imaging", Opt. Let. 24, 291-293 (1999)

4. T. Zhang and I. Yamaguchi, "Three-dimensional microscopy with phase-shifting digital holography", Opt. Let. 23, 1221-1223 (1998).

5. Skarman, Wozniac and Becker "Simultaneous 3D-PIV and temperature measurement using a New CCD based holographic interferometer", Flow Meas. Instr. 7, N°1, pp 1-6 (1996)

6. Y. Takaki and H. Ohzu, "Hybrid holographic microscopy: Vizualization of three-dimensional object information by use of viewing angles", Appl. Opt. 39, 5302-5308 (2000)

7. S. Kirkpatrick, C.D. Gelatt, Jr., M.P. Vecchi, "Optimization by Simulated Annealing", Sciences 220, 671-679 (1983)

8. B. W.Schilling, T-C Poon, G. Indebetouw, B. Storrie, K. Shinoda, Y. Suzuki and M. H. Wu, "Three-dimensional holographic fluorescence microscopy", Optics Letters 22, n°19, 1506-1508 (1997)

## Revendications

**1.** Procédé pour obtenir par microscopie des images en trois dimensions d'un échantillon, en particulier d'un échantillon biologique épais, et du champ de fluorescence émis par cet échantillon, **caractérisé en ce qu'**il comprend:

- une étape de mesure et enregistrement, au cours de laquelle on mesure et on enregistre de façon séquentielle et indépendante d'une part des signaux interférométriques obtenus par holographie digitale et d'autre part des signaux de fluorescence, issus de l'échantillon ;
- une étape de traitement, au cours de laquelle on combine lesdits signaux interférométriques obtenus par holographie digitale et lesdits signaux de fluorescence ainsi enregistrés, de manière à reconstruire des images nettes, en trois dimensions, de l'échantillon lui-même et du champ de fluorescence émis par ledit échantillon à un instant donné.

**2.** Procédé selon la revendication 1, **caractérisé en ce que** l'on réitère au cours du temps lesdites étapes de mesure et enregistrement, et de traitement, de manière à suivre l'évolution des images en trois dimensions de l'échantillon et du champ de fluorescence dudit échantillon.

**3.** Procédé selon la revendication 1 ou 2, **caractérisé en ce que** la combinaison des signaux interférométriques obtenus par holographie digitale et des signaux de fluorescence pour reconstruire les images nettes en trois dimensions de l'échantillon étudié lui-même et du champ de fluorescence dudit échantillon, se fait par analyse numérique.

**4.** Dispositif adapté à la mise en oeuvre du procédé selon l'une des revendications 1 à 3, **caractérisé en ce qu'**il comprend un microscope fonctionnant en holographie digitale, combiné à une source d'excitation de la fluorescence.

**5.** Dispositif selon la revendication 4, **caractérisé en ce que** la source d'excitation en fluorescence fonctionne en mode de réflexion ou de transmission.

6. Dispositif selon la revendication 4 ou 5, **caractérisé en ce que** le microscope fonctionnant en holographie digitale comprend une source de lumière partiellement cohérente, ou éventuellement cohérente, fonctionnant en transmission et qui est capable de générer un faisceau lumineux source.

7. Dispositif selon la revendication 6, **caractérisé en ce que** la source de lumière partiellement cohérente dudit microscope comprend les éléments suivants :

   une source émettrice de lumière de largeur spectrale réduite (S), une première lentille (L1), une première ouverture (A1), une seconde lentille (L2), une seconde ouverture (A2) et une troisième lentille (L3), la disposition relative de ces différents éléments étant telle que lorsque la source fonctionne, la lumière émise par la source émettrice de lumière rencontre successivement la première lentille (L1), la première ouverture (A1), la seconde lentille (L2), la seconde ouverture (A2) et la troisième lentille (L3) et la lumière à la sortie la troisième lentille est une lumière collimatée.

8. Dispositif selon la revendication 6, **caractérisé en ce que** la source de lumière partiellement cohérente dudit microscope comprend les éléments suivants :

   une source émettrice de lumière de largeur spectrale réduite (S), une fibre optique, une première lentille (L1), une seconde lentille (L2), une troisième lentille (L3) et une ouverture (A1) à ouverture réglable, la disposition relative de ces différents éléments étant telle que lorsque la source fonctionne, la lumière émise par la source émettrice de lumière traverse d'abord la fibre optique de manière à avoir un champ lumineux homogène, puis rencontre la première lentille (L1) puis la seconde lentille (L2) et la troisième lentille (L3) pour obtenir une lumière collimatée sur l'ouverture (A1).

9. Dispositif selon la revendication 6, **caractérisé en ce que** la source de lumière partiellement cohérente dudit microscope comprend les éléments suivantes :

   une source laser (S), une première lentille (L1), un diffuseur tournant (D), une seconde lentille (L2) et une ouverture (A), la disposition relative de ces différents éléments étant telle que lorsque la source fonctionne, le faisceau laser émis par la source laser rencontre d'abord la première lentille (L1), puis le diffuseur tournant (D) qui est placé derrière le point focal de ladite première lentille (L1), puis la deuxième lentille (L2) placée à sa distance focale par rapport au plan du diffuseur tournant (D), puis ladite ouverture (A).

10. Dispositif selon la revendication 6, **caractérisé en ce que** la source de lumière partiellement cohérente dudit microscope comprend les éléments suivants :

    une source laser (S), une première lentille (L1), un diffuseur tournant (D) tel qu'un verre dépoli, et une seconde lentille (L2), la disposition relative de ces différents éléments étant telle que lorsque la source fonctionne, le faisceau laser émis par la source laser traverse d'abord la première lentille (L1) puis le diffuseur (D) puis la deuxième lentille (L2), le faisceau laser à la sortie de la première lentille (L1) étant focalisé en un point de focalisation situé en amont du diffuseur à une distance (d) réglable du diffuseur (D).

11. Dispositif selon l'une des revendications 4 à 10, dans lequel le microscope fonctionnant en holographie digitale comprend en outre:

    - un premier sous-ensemble (SE1), mobile, comprenant un séparateur de faisceau (BS1) et un miroir (M1), pour former deux faisceaux parallèles, un faisceau objet (O) et un faisceau de référence (R) à partir du faisceau lumineux source ;
    - des moyens (M), de préférence des miroirs, pour diriger le faisceau lumineux source sur le premier sous-ensemble (SE1), au niveau du séparateur de faisceau (BS1) ;
    - un deuxième sous-ensemble (SE2), fixe ou mobile, comprenant également un séparateur de faisceau (BS2) et un miroir (M2), pour combiner ledit faisceau objet (O) et ledit faisceau de référence (R) en un faisceau lumineux recombiné ;
    - une cellule objet (So) comprenant un échantillon à étudier, disposée sur le trajet optique du faisceau objet (O) entre le premier sous-ensemble (SE1) et le deuxième sous-ensemble (SE2);
    - un premier objectif de microscope (ML1), sur le trajet optique du faisceau objet (O) entre le premier sous-ensemble (SE1) et le deuxième sous-ensemble (SE2), en aval de la cellule objet (So);
    - des moyens de compensation de chemin optique, disposés sur le trajet optique du faisceau de référence (R) entre le premier sous-ensemble (SE1) et le deuxième sous-ensemble (SE2) ;

- un deuxième objectif de microscope (ML2), disposé sur le trajet optique du faisceau de référence (R) entre le premier sous-ensemble (SE1) et le deuxième sous-ensemble (SE2), en aval desdits moyens de compensation de chemin optique;

- des premiers moyens de focalisation (L4) aptes à focaliser le faisceau objet (O) sur la cellule objet (So);

- et des seconds moyens de focalisation (L5) aptes à focaliser le faisceau de référence (R) sur lesdits moyens de compensation de chemin optique.

12. Dispositif selon la revendication 11, **caractérisé en ce que** lesdits moyens de compensation de chemin optique comprennent une cellule de référence (Sr) comparable à la cellule objet (So) mais ne comprenant pas l'échantillon à étudier.

13. Dispositif selon la revendication 11, **caractérisé en ce que** lesdits moyens de compensation de chemin optique comprennent un matériau transparent d'épaisseur et de composition adéquates.

14. Dispositif selon l'une des revendications 4 à 13, **caractérisé en ce qu'**il comprend en outre des moyens d'enregistrement et de traitement, tels que de préférence une caméra CCD couplée à des moyens informatiques de traitement et d'analyse d'images, pour enregistrer et traiter lesdits signaux interférométriques et lesdits signaux de fluorescence, ainsi que des moyens de focalisation additionnels (L6) pour focaliser ledit faisceau lumineux recombiné sur lesdits moyens d'enregistrement (C).

**Claims**

1. A method for obtaining through microscopy three-dimensional images of a sample, in particular of a thick biological sample, and of the fluorescence field emitted by said sample, **characterized in that** it comprises:

- a measuring and recording step, during which interferometric signals obtained by digital holography on one hand and fluorescence signals derived from the sample on the other hand are sequentially and independently measured and recorded;

- a processing step, during which said interferometric signals obtained by digital holography and said fluorescence signals thus recorded are combined so as to reconstruct clear three-dimensional images of the sample itself and of the fluorescence field emitted by the sample at a given time.

2. The method according to claim 1, **characterized in that** said measuring and recording and processing steps are reiterated over time, so as to monitor the evolution of the three-dimensional images of the sample and of the fluorescence field of said sample.

3. The method according to claim 1 or 2, **characterized in that** the combination of the interferometric signals obtained by digital holography and of the fluorescence signals to reconstruct clear three-dimensional images of the studied sample itself and of the fluorescence field of said sample, is performed by digital analysis.

4. A device adapted to implement the method according to one of claims 1 to 3, **characterized in that** it comprises a microscope operating in digital holography, combined with a fluorescence excitation source.

5. The device according to claim 4, **characterized in that** the fluorescence excitation source operates in reflection or transmission mode.

6. The device according to claim 4 or 5, **characterized in that** the microscope operating in digital holography comprises a light source that is partially coherent, or possibly coherent, operating in transmission and which is capable of generating a source light beam.

7. The device according to claim 6, **characterized in that** the partially coherent light source of said microscope comprises the following elements: a source emitting light with a reduced spectral width (S), a first lens (L1), a first aperture (A1), a second lens (L2), a second aperture (A2), and a third lens (L3), the relative arrangement of these various elements being such that when the source is operating, the light emitted by the light-emitting source successively encounters the first lens (L1), the first aperture (A1), the second lens (L2), the second aperture (A2), and the third lens (L3), and the light at the output of the third lens is a collimated light.

8. The device according to claim 6, **characterized in that** the partially coherent light source of said microscope comprises the following elements: a source emitting light with a reduced spectral width (S), an optical fiber, a first lens (L1), a second lens (L2), a third lens (L3), and an aperture (A1) with an adjustable opening, the relative arrangement of these various elements being such that when the source is operating, the light emitted by the light-emitting source first passes through the optical fiber so as to have a homogenous light field, then encounters the first lens (L1), then the second lens (L2) and the third lens (L3) to obtain a collimated light on the opening (A1).

9. The device according to claim 6, **characterized in that** the partially coherent light source of said microscope comprises the following elements: a laser source (S), a first lens (L1), a rotary diffuser (D), a second lens (L2), and an aperture (A), the relative arrangement of these various elements being such that when the source is operating, the laser beam emitted by the laser source first encounters the first lens (L1), then the rotary diffuser (D), which is placed behind the focal point of said first lens (L1), then the second lens (L2) placed at its focal distance relative to the plane of the rotary diffuser (D), then said opening (A).

10. The device according to claim 6, **characterized in that** the partially coherent light source of said microscope comprises the following elements: a laser source (S), a first lens (L1), a rotary diffuser (D) such as a ground glass, and a second lens (L2), the relative arrangement of these various elements being such that when the source is operating, the laser beam emitted by the laser source first passes through the first lens (L1), then the diffuser (D), then the second lens (L2), the laser beam at the output of the first lens (L1) being focused on a focal point located upstream of the diffuser at an adjustable distance (d) from the diffuser (D).

11. The device according to one of claims 4 to 10, wherein the microscope operating in digital holography also comprises:

   - a first mobile sub-assembly (SE1) comprising a beam separator (BS1) and a mirror (M1), to form two parallel beams, an object beam (O) and a reference beam (R), from the light source,
   - means (M), preferably mirrors, for orienting the source light beam onto the first sub-assembly (SE1), at the beam separator (BS1) level;
   - a second sub-assembly (SE2), which can be stationary or mobile, also comprising a beam separator (BS2) and a mirror (M2), to combine said object beam (O) and said reference beam (R) in a recombined light beam,
   - an object cell (So) comprising a sample to be studied, positioned on the optical journey of the object beam (O) between the first sub-assembly (SE1) and the second sub-assembly (SE2);
   - a first microscope lens (ML1), on the optical journey of the object beam (O) between the first sub-assembly (SE1) and the second sub-assembly (SE2), downstream of the object cell (So);
   - means for compensating the optical path, positioned on the optical journey of the reference beam (R) between the first sub-assembly (SE1) and the second sub-assembly (SE2);
   - a second microscope lens (ML2), positioned on the optical journey of the reference beam (R) between the first sub-assembly (SE1) and the second sub-assembly (SE2), downstream of said optical path compensating means;
   - first focusing means (L4) able to focus the object beam (O) on the object cell (So); and
   - second focusing means (L5) able to focus the reference beam (R) on said optical path compensating means.

12. The device according to claim 11, **characterized in that** said optical path compensating means comprise a reference cell (Sr) comparable to the object cell (So), but not comprising the sample to be studied.

13. The device according to claim 11, **characterized in that** said optical path compensating means comprise a transparent material with a suitable thickness and composition.

14. The device according to one of claims 4 to 13, **characterized in that** it also comprises recording and processing means, preferably such as a CCD camera coupled to computer image processing and analysis means, to record and process said interferometric signals and said fluorescence signals, as well as additional focusing means (L6) to focus said recombined light beam on said recording means (C).

**Patentansprüche**

1. Verfahren, um durch Mikroskopie einer Probe, insbesondere einer dicken biologischen Probe, und des von dieser Probe gesendeten Fluoreszenzfelds, dreidimensionale Bilder zu erhalten, **dadurch gekennzeichnet, dass** es umfasst:

- einen Mess- und Aufzeichnungsschritt, bei dem einerseits interferometrische Signale, die durch digitale Holographie erzeugt wurden, und andererseits Fluoreszenzsignale, die von der Probe ausgehen, sequentiell und unabhängig gemessen und aufgezeichnet werden;

- einen Verarbeitungsschritt, bei dem die durch digitale Holographie erzeugten interferometrischen Signale und die somit aufgezeichneten Fluoreszenzsignale derart kombiniert werden, dass klare dreidimensionale Bilder der Probe selbst und des von der Probe in einem bestimmten Augenblick gesendeten Fluoreszenzfelds rekonstruiert werden.

2. Verfahren nach Anspruch 1, **dadurch gekennzeichnet, dass** die Mess- und Aufzeichnungs- und Verarbeitungsschritte im Laufe der Zeit derart wiederholt werden, dass die Entwicklung der dreidimensionalen Bilder der Probe und des Fluoreszenzfelds der Probe verfolgt wird.

3. Verfahren nach einem der Ansprüche 1 oder 2, **dadurch gekennzeichnet, dass** die Kombination der interferometrischen Signale, die durch digitale Holographie gewonnen wurden, und der Fluoreszenzsignale zur Rekonstruktion der klaren dreidimensionalen Bilder der untersuchten Probe selbst und des Fluoreszenzfelds der Probe durch digitale Analyse erfolgt.

4. Vorrichtung, die für die Umsetzung des Verfahrens nach einem der Ansprüche 1 bis 3 geeignet ist, **dadurch gekennzeichnet, dass** sie ein Mikroskop umfasst, das digitalholographisch arbeitet, kombiniert mit einer Erregungsquelle der Fluoreszenz.

5. Vorrichtung nach Anspruch 4, **dadurch gekennzeichnet, dass** die Fluoreszenzerregungsquelle im Reflexions- oder Übertragungsmodus arbeitet.

6. Vorrichtung nach Anspruch 4 oder 5, **dadurch gekennzeichnet, dass** das digitalholographisch arbeitende Mikroskop eine teilweise kohärente oder eventuell kohärente Lichtpuelle umfasst, die übertragend arbeitet und die imstande ist, ein Quelllichtbündel zu erzeugen.

7. Vorrichtung nach Anspruch 6, **dadurch gekennzeichnet, dass** die teilweise kohärente Lichtquelle des Mikroskops die folgenden Elemente umfasst:

eine sendende Lichtquelle mit reduzierter Spektralbreite (S), eine erste Linse (L1), eine erste Öffnung (A1), eine zweite Linse (L2), eine zweite Öffnung (A2) und eine dritte Linse (L3), wobei die relative Anordnung dieser verschiedenen Elemente derart ist, dass, wenn die Quelle arbeitet, das von der sendenden Lichtquelle gesendete Licht nacheinander auf die ersten Linse (L1), die zweite Öffnung (A1), die zweite Linse (L2), die zweite Öffnung (A2) und die dritte Linse (L3) fällt und das Licht am Ausgang der dritten Linse ein kollimiertes Licht ist.

8. Vorrichtung nach Anspruch 6, **dadurch gekennzeichnet, dass** die teilweise kohärente Lichtquelle des Mikroskops die folgenden Elemente umfasst:

eine sendende Lichtquelle mit reduzierter Spektralbreite (S), eine optische Faser, eine erste Linse (L1), eine zweite Linse (L2), eine dritte Linse (L3) und eine Öffnung (A1) mit einstellbarer Öffnung, wobei die relative Anordnung dieser verschiedenen Elemente derart ist, dass, wenn die Quelle arbeitet, das von der sendenden Lichtquelle gesendete Licht zunächst die optische Faser derart durchquert, dass ein homogenes Lichtfeld entsteht und dann auf die erste Linse (L1) und dann die zweite Linse (L2) und die dritte Linse (L3) fällt, um über die Öffnung (A1) ein kollimiertes Licht zu erhalten.

9. Vorrichtung nach Anspruch 6, **dadurch gekennzeichnet, dass** die teilweise kohärente Lichtquelle des Mikroskops die folgenden Elemente umfasst:

eine Laserquelle (S), eine erste Linse (L1), einen rotierenden Diffusor (D), eine zweite Linse (L2) und eine Öffnung (A), wobei die relative Anordnung dieser verschiedenen Elemente derart ist, dass, wenn die Quelle arbeitet, das von der Laserquelle gesendete Laserbündel zunächst auf die erste Linse (L1), danach auf den rotierenden Diffusor (D), der hinter dem Fokalpunkt der ersten Linse (L1) platziert ist, danach auf die zweite Linse (L2), die in ihrem Fokalabstand im Verhältnis zur Ebene des rotierenden Diffusors (D) platziert ist, dann auf die Öffnung (A) fällt.

10. Vorrichtung nach Anspruch 6, **dadurch gekennzeichnet, dass** die teilweise kohärente Lichtquelle des Mikroskops die folgenden Elemente umfasst: eine Laserquelle (S), eine erste Linse (L1), einen rotierenden Diffusor (D) wie ein Mattglas und eine zweite Linse (L2), wobei die relative Anordnung dieser verschiedenen Elemente derart ist, dass, wenn die Quelle arbeitet, das von der Laserquelle gesendete Laserbündel zunächst die erste Linse (L1), danach den Diffusor (D), danach die zweite Linse (L2) durchquert, wobei das Laserbündel am Ausgang der ersten Linse (L1) in einem Fokalpunkt fokalisiert ist, der sich vor dem Diffusor in einem einstellbaren Abstand (d) des Diffusors (D) befindet.

**11.** Vorrichtung nach einem der Ansprüche 4 bis 10, **dadurch gekennzeichnet, dass** das digitalholographisch arbeitende Mikroskop ferner umfasst:

- eine erste mobile Untergruppe (SE1), die einen Lichtbündelseparator (BS1) und einen Spiegel (M1) umfasst, um zwei parallele Lichtbündel zu bilden, ein Objektlichtbündel (O) und ein Referenzlichtbündel (R) ausgehend von dem Quelllichtbündel,
- Mittel (M), vorzugsweise Spiegel, um das Quelllichtbündel über die erste Untergruppe (SE1) auf Ebene des Lichtbündelseparators (BS1) zu leiten,
- eine zweite starre oder mobile Untergruppe (SE2), die ebenfalls einen Lichtbündelseparator (BS2) und einen Spiegel (M2) umfasst, um das Objektlichtbündel (O) und das Referenzlichtbündel (R) in einem rekombinierten Lichtbündel zu kombinieren,
- eine Objektzelle (So), die eine zu untersuchende Probe umfasst, die auf dem optischen Weg des Objektlichtbündels (O) zwischen der ersten Untergruppe (SE1) und der zweiten Untergruppe (SE2) angeordnet ist,
- ein erstes Mikroskopobjektiv (ML1) auf dem optischen Weg des Objektlichtbündels (O) zwischen der ersten Untergruppe (SE1) und der zweiten Untergruppe (SE2) nach der Objektzelle (So),
- Kompensationsmittel des optischen Wegs, die auf dem optischen Weg des Refernzlichtbündels (R) zwischen der ersten Untergruppe (SE1) und der zweiten Untergruppe (SE2) angeordnet sind,
- ein zweites Mikroskopobjektiv (ML2), das auf dem optischen Weg des Refernzlichtbündels (R) zwischen der ersten Untergruppe (SE1) und der zweiten Untergruppe (SE2) nach den Kompensationsmitteln des optischen Wegs angeordnet ist,
- erste Fokalisierungsmittel (L4), die imstande sind, das Objektlichtbündel (O) auf die Objektzelle (So) zu fokalisieren, und
- zweite Fokalisierungsmittel (L5), die imstande sind, das Referenzlichtbündel (R) auf Kompensationsmittel des optischen Wegs zu fokalisieren.

**12.** Vorrichtung nach Anspruch 11, **dadurch gekennzeichnet, dass** die Kompensationsmittel des optischen Wegs eine Referenzzelle (Sr) umfassen, die mit der Objektzelle (So) vergleichbar ist, aber die zu untersuchende Probe nicht umfasst.

**13.** Vorrichtung nach Anspruch 11, **dadurch gekennzeichnet, dass** die Kompensationsmittel des optischen Wegs ein transparentes Material mit einer Dicke und in einer Zusammensetzung umfassen, die adäquat sind.

**14.** Vorrichtung nach einem der Ansprüche 4 bis 13, **dadurch gekennzeichnet, dass** sie ferner Aufzeichnungs- und Verarbeitungsmittel umfasst, wie eine CCD-Kamera, die an EDV-Mittel zur Verarbeitung und Analyse von Bildern gekoppelt ist, um die interferometrischen Signale und die Fluoreszenzsignale aufzuzeichnen und zu verarbeiten, sowie zusätzliche Fokalisierungsmittel (L6), um das rekombinierte Lichtstrahlenbündel auf die Aufzeichnungsmittel (C) zu fokalisieren.

A1      A2

s

L1    L2    L3

FIG. 1

A1

L3    L2   L1

s

FIG. 2

FIG. 3

FIG.4

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6038041 A

**Littérature non-brevet citée dans la description**

- **F. Dubois et al.** Improved three-dimensional imaging with digital holography microscope using a partial spatial coherent source. *Appl. Opt,* 1999, vol. 38, 7085-7094
- **M. Takeda ; H. Ina ; S. Kobayashi.** Fourier transform method of fringe pattern analysis for computer based topography and interferometry. *J. Opt. Soc. Am.,* 1972, vol. 72, 156-160
- **F. Dubois ; L. Joannes ; J.-C. Legros.** Improved three-dimensional imaging with digital holography microscope using a partial spatial coherent source. *Appl. Opt.,* 1999, vol. 38, 7085-7094
- **E. Cuche ; F.Bevilacqua ; C. Depeursinge.** Digital holography for quantitative phase contrast imaging. *Opt. Let.,* 1999, vol. 24, 291-293
- **T. Zhang ; I. Yamaguchi.** Three-dimensional microscopy with phase-shifting digital holography. *Opt. Let.,* 1998, vol. 23, 1221-1223
- **Skarman ; Wozniac ; Becker.** Simultaneous 3D-PIV and temperature measurement using a New CCD based holographic interferometer. *Flow Meas. Instr.,* 1996, vol. 7 (1), 1-6
- **Y. Takaki ; H. Ohzu.** Hybrid holographic microscopy: Vizualization of three-dimensional object information by use of viewing angles. *Appl. Opt.,* 2000, vol. 39, 5302-5308
- **S. Kirkpatrick ; C.D. Gelatt, Jr. ; M.P. Vecchi.** Optimization by Simulated Annealing. *Sciences,* 1983, vol. 220, 671-679
- **B. W.Schilling ; T-C Poon ; G. Indebetouw ; B. Storrie ; K. Shinoda ; Y. Suzuki ; M. H. Wu.** Three-dimensional holographic fluorescence microscopy. *Optics Letters,* 1997, vol. 22 (19), 1506-1508